# FASCICULE DE BREVET EUROPEEN

(11) **EP 3 539 675 B1**
(45) Date de publication et mention de la délivrance du brevet: **13.10.2021**
(21) Numéro de dépôt: 19162989.8
(22) Date de dépôt: 14.03.2019
(51) Int. Cl.: B05B 13/04, B05C 5/02, B25J 9/08, B25J 9/00, B05C 11/10, B25J 11/00, B25J 13/08, B05B 13/02

(54) **DISPOSITIF D'APPLICATION D'UN PRODUIT FLUIDE DONT LE DÉBIT DE DOSAGE DÉPEND DE LA VITESSE D'UN ORIFICE DE SORTIE DUDIT PRODUIT FLUIDE**
VORRICHTUNG ZUM AUFBRINGEN EINES FLÜSSIGEN PRODUKTS, DESSEN DOSIERDURCHSATZ VON DER GESCHWINDIGKEIT EINER AUSTRITTSÖFFNUNG DIESES FLÜSSIGEN PRODUKTS ABHÄNGT
DEVICE FOR APPLYING A LIQUID PRODUCT IN WHICH THE DISPENSING FLOW RATE DEPENDS ON THE SPEED OF AN OUTPUT OPENING OF SAID FLUID PRODUCT

(30) Priorité: 15.03.2018 FR 1852232
(43) Date de publication de la demande: 18.09.2019
(73) Titulaire: Exel Industries, 51200 Epernay (FR)
(72) Inventeur: DE TALHOUET, Philippe, 75009 Paris (FR); FERRERE, Nicolas, 75009 Paris (FR)
(74) Mandataire: Lavoix

(56) Documents cités:
- US-A- 4 013 037
- US-A- 5 054 650
- US-A1- 2005 048 196
- US-A1- 2016 052 296
- US-A1- 2017 203 318
- US-B2- 8 886 980

## Description

La présente invention concerne un dispositif d'application pour l'application d'au moins un produit fluide sur un substrat, le dispositif d'application étant du type comprenant :
- un organe d'application, pour la mise en forme du ou de chaque produit fluide en vue de son application sur le substrat, l'organe d'application présentant un orifice de sortie du ou des produit(s) fluide(s) hors du dispositif d'application,
- pour au moins un produit fluide, un organe de réglage apte à régler un débit de dosage du produit fluide à travers l'orifice de sortie en fonction d'une consigne de commande dudit organe de réglage, et
- un module de commande pour déterminer la consigne de commande et la fournir à l'organe de réglage.

Par « produit fluide », on comprend ici et dans la suite un produit qui a une viscosité comprise entre 1 mPa.s et 2 kPa.s, cette viscosité étant par exemple mesurée à l'aide d'un viscosimètre Brookfield Plan Cone dans des conditions normales de température et de pression. Cette expression regroupe ainsi les produits à l'état liquide, parfaitement déformables et à faible viscosité, mais également les produits généralement qualifiés de « pâteux », plus visqueux que les liquides et présentant un état intermédiaire entre l'état liquide et l'état solide.

L'invention concerne également un robot applicateur comprenant un tel dispositif d'application, et un procédé d'application d'un produit fluide sur un substrat au moyen d'un tel dispositif d'application.

US 2016/052296 A1 décrit un système d'application de peinture pour reproduire de manière automatique une image haute résolution sur une aire d'une surface dans un environnement non contrôlé comprenant une machine robotique de peinture.

Des dispositifs d'application du type précité sont connus. Ils sont généralement utilisés pour appliquer sur des surfaces des produits fluides tels que des cordons de colle ou de la peinture, en particulier lorsqu'il est nécessaire de maîtriser précisément le débit du produit fluide en sortie du dispositif d'application. A cet effet, ces dispositifs d'application sont montés sur des bras articulés robotisés pilotés par des baies de contrôle de sorte à déplacer les organes d'application de ces dispositifs d'application relativement aux surfaces à recouvrir. Ces baies de contrôle sont le plus souvent disposées à côté desdits bras articulés, et chaque dispositif d'application dispose de sa propre armoire de commande disposée à côté de la baie de contrôle du bras articulé sur lequel le dispositif d'application est monté.

Généralement, l'objectif recherché avec l'emploi de ce type de dispositif d'application est de répartir le produit fluide de la manière la plus homogène possible sur la surface à recouvrir.

Cet objectif est atteignable aisément lorsque la vitesse de l'orifice de sortie, également appelée « vitesse pointe outil », est constante : pour obtenir une répartition homogène du produit fluide sur la surface à recouvrir, il suffit en effet dans ce cas de maintenir un débit de dosage sensiblement constant, ce que l'on sait réaliser sans difficulté.

Une complication survient en revanche lorsque la vitesse pointe outil varie, par exemple lorsque la direction de déplacement de l'organe d'application change suite à l'arrivée de l'organe d'application en extrémité de la surface à recouvrir. Dans ce cas, le débit de dosage doit être modifié proportionnellement à la vitesse pointe outil de sorte à continuer d'appliquer localement une quantité constate de produit ; en particulier, le débit de dosage doit être diminué lorsque le déplacement de l'orifice de sortie ralentit et augmenté lorsque le déplacement de l'orifice de sortie accélère.

Pour que le débit de dosage puisse ainsi être ajusté en fonction de la vitesse pointe outil, cette vitesse pointe outil doit être connue du module de commande. A cet effet, il a été développé des bras robotisés adaptés pour communiquer aux armoires de commande des dispositifs d'application montés dessus une estimation de la vitesse pointe outil basée sur les instructions de déplacement communiquées par la baie de contrôle au bras articulé. Cette solution est toutefois insatisfaisante sur plusieurs points :
- elle pose des problèmes de compatibilité entre les bras robotisés et les dispositifs d'application,
- elle ne permet pas l'ajustement du débit de dosage en fonction de la vitesse pointe outil lorsque le dispositif d'application est monté sur un bras robotisé d'ancienne génération ne disposant pas de la fonction précitée, et
- le délai induit par le traitement des informations de vitesse au niveau de l'armoire de commande du dispositif d'application puis la transmission de la consigne de commande à l'organe de réglage entraîne généralement un retard dans la correction du débit de dosage qui rend cette correction inadaptée.

Un objectif de l'invention est ainsi de permettre l'application homogène d'un produit fluide sur une surface à recouvrir, quelle que soit la vitesse de déplacement de l'orifice de sortie du produit fluide relativement à ladite surface et quel que soit le dispositif employé pour déplacer ledit orifice de sortie.

A cet effet, l'invention a pour objet un dispositif d'application selon la revendication 1, dans lequel le dispositif d'application comprend également un dispositif de mesure de vitesse apte à déterminer une vitesse mesurée de l'orifice de sortie relativement à un référentiel inertiel, et le module de commande est configuré pour déterminer la consigne de commande en fonction de ladite vitesse mesurée.

Selon des modes de réalisation particuliers de l'invention, le dispositif d'application présente également l'une ou plusieurs des caractéristiques selon les revendications dépendantes.

L'invention a également pour objet un robot applicateur pour l'application d'un produit fluide sur un substrat, le robot comprenant un bâti, un bras articulé formé d'une pluralité de segments articulés les uns aux autres, un poignet monté à une extrémité du bras articulé, et un dispositif d'application tel que défini ci-dessus dont l'organe d'application est monté à une extrémité distale du poignet.

Selon des modes de réalisation particuliers de l'invention, le dispositif d'application présente également l'une ou plusieurs des caractéristiques suivantes, prise(s) isolément ou suivant toute(s) combinaison(s) techniquement possible(s) :
- le module de commande est monté sur le poignet ou sur le segment le plus proche du poignet,
- le dispositif de mesure de vitesse est monté sur l'organe d'application ; et
- la vitesse mesurée est constituée par la vitesse de l'orifice de sortie relativement au bâti.

L'invention a encore pour objet un procédé d'application d'un produit fluide sur un substrat, comprenant les étapes successives suivantes :
- fourniture d'un dispositif d'application tel que décrit plus haut,
- dosage du produit fluide à travers l'orifice de sortie à un premier débit de dosage, l'orifice de sortie se déplaçant à une première vitesse,
- changement de vitesse de l'orifice de sortie, et
- dosage du produit fluide à travers l'orifice de sortie à un deuxième débit de dosage différent du premier débit de dosage.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue en perspective d'une installation d'application d'un produit fluide sur un substrat comprenant un robot applicateur selon l'invention,
- la Figure 2 est une vue schématique d'un dispositif d'application du robot applicateur de la Figure 1, et

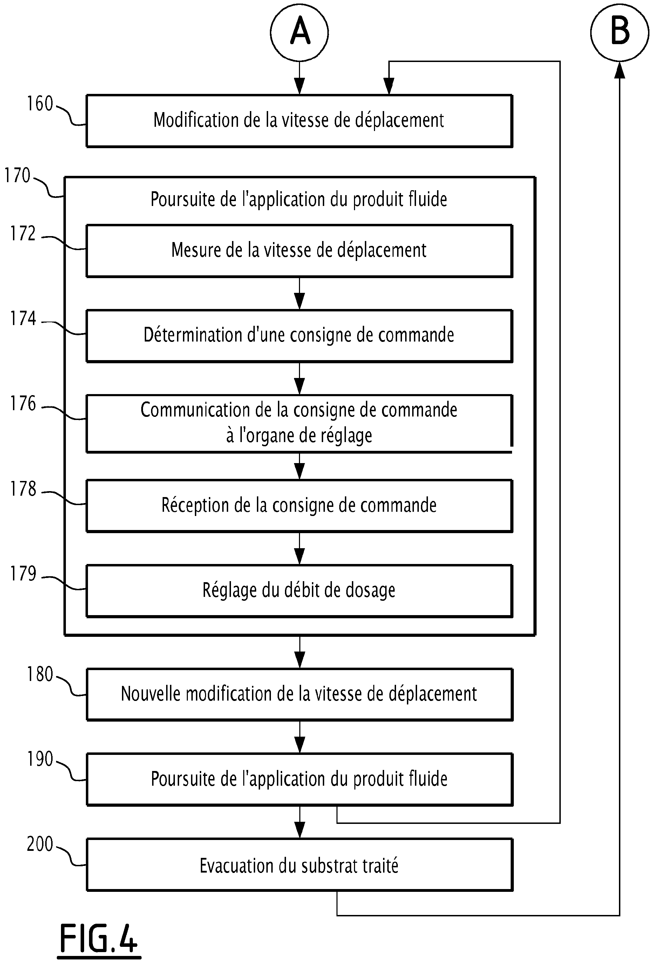

- les Figures 3 et 4 sont des diagrammes en blocs illustrant un procédé mis en oeuvre par l'installation d'application de la Figure 1.

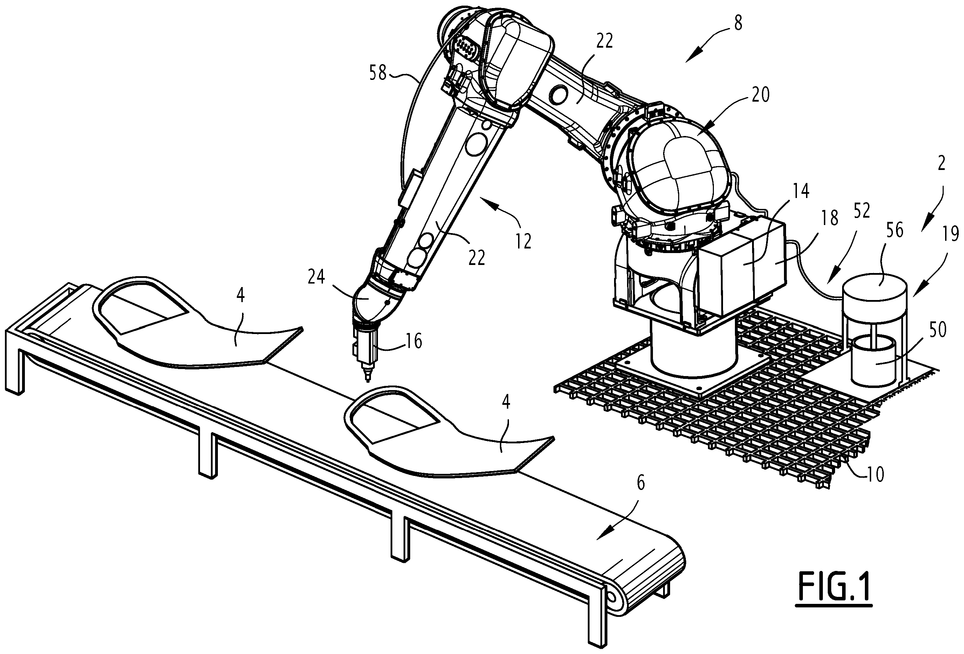

L'installation 2 représentée sur la Figure 1 est destinée à l'application d'un produit fluide sur des substrats 4.

Le produit fluide est typiquement constitué par un produit à haute viscosité, c'est-à-dire dont la viscosité est supérieure à 3000 mPa.s. Des exemples de tels produits à haute viscosité sont typiquement des mastics ou des colles élastomères ou epoxy. Avantageusement, le produit fluide a une viscosité comprise entre 3000 et 300000 Pa.s.

Les substrats 4 sont ici constitués par des plaques préformées, typiquement par des plaques de tôle embouties.

A cet effet, l'installation 2 comprend, de façon connue, un système 6 de déplacement des substrats 4 et un robot applicateur 8 pour l'application du produit fluide sur les substrats 4.

Le système de déplacement 6 est configuré pour déplacer les substrats 4 à l'intérieur de l'installation 2 en immobilisant chaque substrat 4 relativement au plancher 10 de l'installation 2, pendant une durée prédéterminée, dans un périmètre d'action du robot applicateur 8.

Dans l'exemple représenté, le système de déplacement 6 est constitué par un tapis d'entraînement portant les substrats 4.

Le robot applicateur 8 comprend un robot multiaxe 12, une baie de contrôle 14 pour la commande du robot 12, un dispositif d'application 16 pour l'application du produit fluide sur les substrats 4, une armoire de commande 18 pour la commande du dispositif d'application 12, et un système d'alimentation 19 pour l'alimentation du dispositif d'application 16 avec le produit fluide.

Le robot multiaxe 12 comprend, de manière connue, un bâti (non représenté) fixe relativement au plancher 10, un bras articulé 20 formé d'une pluralité de segments 22 articulés les uns aux autres, et un poignet 24 monté à une extrémité du bras articulé 20.

Le poignet 24 comprend une extrémité proximale (non représentée) par laquelle il est relié à l'un des segments 22 du bras 20, et une extrémité distale (non représentée) opposée à l'extrémité proximale.

Le robot multiaxe 12 comprend également une pluralité de moteurs (non représentés), montés à l'interface entre les segments 22 du bras 20 et avec le poignet 24, pour entraîner la rotation desdits segments 22 et dudit poignet 24 les uns par rapport aux autres.

La baie de contrôle 14 comprend des circuits électriques (non représentés) pour déterminer une consigne de commande de chaque moteur du robot 12 et fournir cette consigne de commande à chaque moteur concerné.

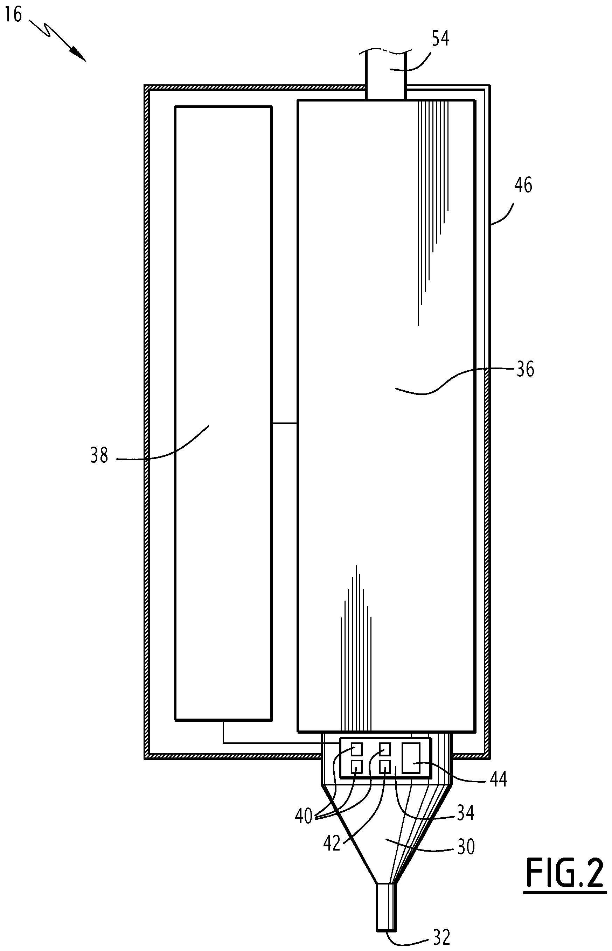

En référence à la Figure 2, le dispositif d'application 16 comprend un organe d'application 30 destiné à la mise en forme du produit fluide en vue de son application sur le substrat. A cet effet, l'organe d'application 30 comprend un orifice de sortie 32 pour la sortie du produit fluide hors du dispositif d'application 16, cet orifice de sortie 32 étant typiquement constitué par une buse.

Le dispositif d'application 16 comprend également un dispositif de mesure de vitesse 34, un organe de réglage 36 apte à régler un débit de dosage du produit fluide à travers l'orifice de sortie 32, et un module de commande 38 pour déterminer une consigne de commande en débit de l'organe de réglage 36 et fournir cette consigne de commande à l'organe de réglage 36.

Le dispositif de mesure de vitesse 34 est apte à déterminer une vitesse mesurée de l'orifice de sortie 32 relativement à un référentiel inertiel, en particulier relativement au plancher 10 de l'installation 2. A cet effet, le dispositif de mesure de vitesse 34 est typiquement constitué par une centrale à inertie comprenant :
- trois accéléromètres 40, chacun apte à mesurer une accélération selon une direction propre orthogonale à la direction de mesure d'accélération de chaque autre accéléromètre 40,
- un gyroscope 42, apte à mesurer une vitesse angulaire autour de chacun de trois axes de rotation orthogonaux les uns aux autres, et
- un magnétomètre 44 apte à mesurer les trois composantes d'un champ magnétique au niveau dudit magnétomètre 44.

Chaque accéléromètre 40 et chaque gyroscope 42 est typiquement constitué par un microsystème électromécanique inertiel.

Les accéléromètres 40, le gyroscope 42 et le magnétomètre 44 sont typiquement intégrés dans une carte électronique commune (non représentée).

L'intégralité du dispositif de mesure de vitesse 34 est à une distance de l'orifice de sortie 32 inférieure à 15 cm. Ainsi, les mouvements mesurés par le dispositif de mesure de vitesse 34 sont très proches des mouvements de l'orifice de sortie 32.

A cet effet, le dispositif de mesure de vitesse 34 est, comme représenté, monté sur l'organe d'application 30.

Le dispositif de mesure de vitesse 34 est configuré pour transmettre la vitesse mesurée au module de commande 38.

L'organe de réglage 36 est apte à définir le débit de dosage du produit fluide à travers l'orifice de sortie 32, ledit débit de dosage étant fonction de la consigne de commande en débit fournie par le module de commande 38. A cet effet, l'organe de réglage 36 est typiquement constitué par une pompe alimentant l'organe d'application 30, le débit du produit fluide en sortie de ladite pompe constituant le débit de dosage.

Par exemple, l'organe de réglage 36 est constitué par une pompe à simple ou double effet comprenant une chambre et un piston (non représentés), la vitesse de déplacement du piston dans la chambre déterminant le débit de dosage. En variante, l'organe de réglage 36 est constitué par une pompe à pistons axiaux dont la vitesse de rotation détermine le débit de dosage.

L'organe de réglage 36 est à une distance de l'orifice de sortie 32 inférieure à 15cm. Ainsi, les variations du débit de sortie de la pompe se répercutent de manière presque instantanée sur le débit de dosage.

Le module de commande 38 est configuré pour déterminer la consigne de commande en débit en fonction de la vitesse mesurée, et pour adapter cette consigne de sorte que le rapport entre le débit de dosage du produit fluide et la vitesse mesurée de l'orifice de sortie 32 soit sensiblement constant.

A cet effet, le module de commande 38 est adapté pour recevoir du dispositif de mesure 34 la vitesse mesurée, et pour déduire de cette vitesse mesurée la consigne de commande en débit. Pour ce faire, le module de commande 38 est typiquement réalisé sous forme de composants logiques programmables et/ou de circuits intégrés dédiés inclus dans le dispositif d'application 16.

L'intégralité du module de commande 38 est à une distance du dispositif de mesure de vitesse 34 inférieure à 5cm et à une distance de l'organe de réglage 36 inférieure à 10cm. Ainsi, les échanges d'informations entre le module de commande 38 et chacun des dispositif de mesure de vitesse 34 et organe de réglage 36 sont presque instantanés, ce qui permet une très grande réactivité de l'organe de réglage 36 suite aux variations de vitesse de l'orifice de sortie déterminées par le dispositif de mesure 34.

Dans l'exemple représenté, l'organe d'application 30, le dispositif de mesure de vitesse 34, l'organe de réglage 36 et le module de commande 38 sont tous intégrés à un même boîtier 46 monté sur le poignet 24 du bras articulé 20. En variante, au moins une partie du dispositif d'application 16 n'est pas montée sur le poignet 24 : par exemple, l'organe de réglage 36 est monté sur le segment 22 du bras articulé 20 le plus proche du poignet 24.

Quel que soit le montage du dispositif d'application 16, l'organe d'application 30 est de préférence toujours monté à l'extrémité distale du poignet 24.

De retour à la Figure 1, le système d'alimentation 19 comprend une cuve 50 contenant le produit fluide, et un système de transfert fluidique 52 pour transférer le produit fluide contenu dans la cuve 50 à une entrée 54 (Figure 2) de l'organe de réglage 36.

Le système de transfert fluidique 52 est adapté pour fournir le produit fluide au dispositif d'application 16 à une pression supérieure à 1,1 fois la pression atmosphérique. A cet effet, le système de transfert fluidique 52 comprend un groupe élévateur 56 pour pomper le produit fluide dans la cuve 50, et une conduite 58 reliant fluidiquement une sortie (non représentée) du groupe élévateur 56 à l'entrée 54 de l'organe de réglage 36.

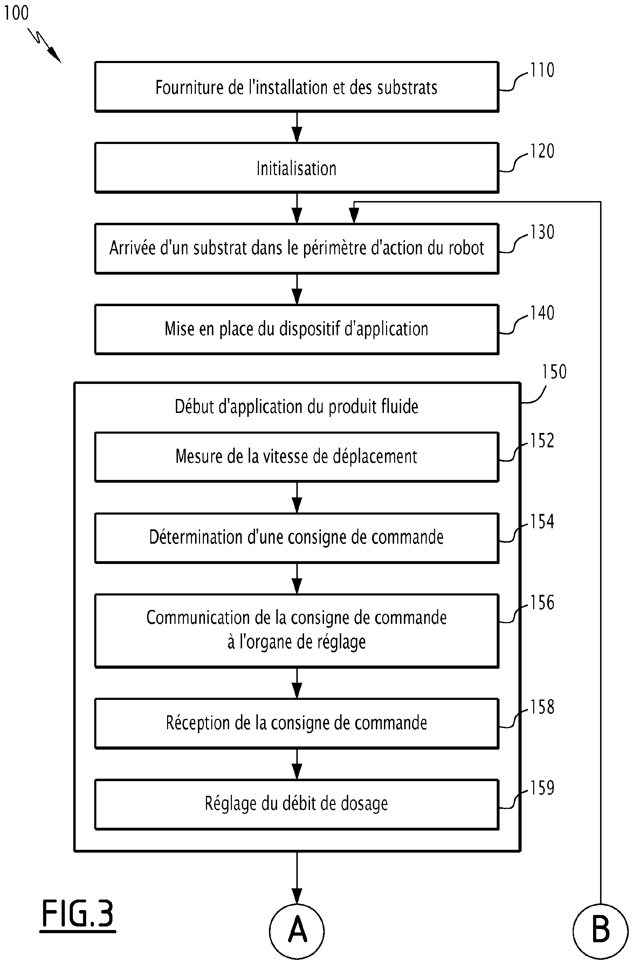

Un procédé 100 d'application du produit fluide au moyen de l'installation 2 va maintenant être décrit, en référence à la Figure 3.

Tout d'abord, au cours d'une première étape 110, l'installation 2 et les substrats 4 sont fournis.

Cette étape 110 est suivie d'une étape 120 d'initialisation.

Cette étape 120 comprend une première sous-étape lors de laquelle le groupe élévateur 56 est activé. Celui-ci se met alors à pomper le produit dans la cuve 50 et à le refouler dans la conduite 58.

L'étape 120 comprend également une deuxième sous-étape, sensiblement simultanée avec la première sous-étape, lors de laquelle le dispositif de mesure 34 est activé. A compter de cette sous-étape, le dispositif de mesure 34 mesure continûment la vitesse de l'orifice de sortie 32.

Ensuite, lors d'une étape 130, un substrat 4 est apporté par le système de déplacement 6 dans le périmètre d'action du robot applicateur 8, puis immobilisé dans ledit périmètre d'action.

La baie de contrôle 14 commande alors, lors d'une étape 140, le déplacement du bras articulé 20 de façon à venir placer l'orifice de sortie 32 du dispositif d'application 16 en vis-à-vis d'une surface à recouvrir du substrat 4, à une distance adaptée pour l'application du produit fluide sur ladite surface.

Puis, lors d'une étape 150, le robot applicateur 8 amorce l'application du produit fluide sur le substrat 4.

Tout au long de cette étape 150, l'orifice de sortie 32 est déplacé par le robot 12, relativement au plancher 10, à une première vitesse, en suivant la surface à recouvrir, et une consigne est communiquée par l'armoire de commande 18 au dispositif d'application 16 pour l'application du produit fluide.

L'étape 150 comprend une première sous-étape 152 lors de laquelle la première vitesse est mesurée par le dispositif de mesure 34.

Ensuite, lors d'une sous-étape 154, le module de commande 38 détermine une première consigne de commande de l'organe de réglage 36 fonction de ladite première vitesse et communique cette première consigne de commande à l'organe de réglage 36 lors d'une sous-étape 156.

Cette consigne de commande est reçue par l'organe de réglage 36 lors d'une sous-étape 158, suite à laquelle l'organe de réglage 36 règle le débit de dosage à un premier débit lors d'une sous-étape 159. Ce premier débit est tel que le rapport dudit premier débit sur la première vitesse est égal à une constante prédéterminée.

Le produit fluide est ensuite appliqué avec un débit de dosage égal au premier débit pendant toute la suite de l'étape 150.

Puis, lors d'une étape 160, le robot 12 modifie la vitesse de déplacement de l'orifice de sortie 32 relativement au plancher 10. Ce changement de vitesse consiste typiquement en un ralentissement survenant lors d'un changement de la direction de déplacement de l'orifice de sortie 32.

L'étape 160 est ainsi suivie d'une étape 170 de poursuite de l'application du produit fluide sur le substrat 4 à une vitesse modifiée.

Tout au long de cette étape 170, l'orifice de sortie 32 est déplacé par le robot 12, relativement au plancher 10, à la vitesse modifiée, en suivant la surface à recouvrir, et une consigne est communiquée par l'armoire de commande 18 au dispositif d'application 16 pour l'application du produit fluide.

L'étape 170 comprend une première sous-étape 172 lors de laquelle la vitesse modifiée est mesurée par le dispositif de mesure 34.

Ensuite, lors d'une sous-étape 174, le module de commande 38 détermine une nouvelle consigne de commande de l'organe de réglage 36 fonction de ladite vitesse modifiée et communique cette nouvelle consigne de commande à l'organe de réglage 36 lors d'une sous-étape 176.

Cette nouvelle consigne de commande est reçue par l'organe de réglage 36 lors d'une sous-étape 178, suite à laquelle l'organe de réglage 36 règle, lors d'une sous-étape 179, le débit de dosage à un nouveau débit. Ce nouveau débit est tel que le rapport dudit nouveau débit sur la vitesse modifiée est égal à ladite constante prédéterminée.

Le produit fluide est ensuite appliqué avec un débit de dosage égal au nouveau débit pendant toute la suite de l'étape 170. Il en résulte une application du produit fluide qui est homogène avec l'application précédemment réalisée.

Puis, lors d'une étape 180, le robot 12 modifie à nouveau la vitesse de déplacement de l'orifice de sortie 32. Ce changement de vitesse consiste typiquement en une accélération faisant suite au changement de la direction de déplacement de l'orifice de sortie 32 survenu lors des étapes 160 et 170.

L'étape 180 est ainsi suivie d'une nouvelle étape 190 de poursuite de l'application du produit fluide sur le substrat 4 à une vitesse modifiée. Cette étape 190 est identique à l'étape 170.

Les étapes 160, 170, 180 et 190 sont répétées à chaque changement de la direction de déplacement de l'orifice de sortie 32.

Finalement, une fois l'intégralité de la surface à recouvrir recouverte avec du produit fluide, le substrat 4 est évacué par le système de déplacement 6 hors du périmètre d'action du robot applicateur 8 lors d'une étape 200.

Les étapes 130 à 200 sont ensuite répétées jusqu'à ce que tous les substrats 4 aient été traités par le robot applicateur 8.

Grâce à l'invention décrite ci-dessus, il est ainsi possible d'appliquer un produit fluide sur une surface à recouvrir de manière homogène, indépendamment de la vitesse de déplacement de l'orifice de sortie du produit fluide relativement à ladite surface et indépendamment des moyens employés pour déplacer ledit orifice de sortie.

Cette solution est ainsi polyvalente. Elle est en outre économique, puisqu'elle permet la réutilisation de robots multiaxes non équipés d'un module de communication de la vitesse pointe outil estimée.

Dans l'exemple décrit ci-dessus, le robot applicateur 8 est adapté pour l'application d'un seul produit fluide à la fois. En variante (non représentée), le robot applicateur 8 est adapté pour l'application de plusieurs produits fluides simultanément. Dans ce cas, le robot applicateur 8 comprend, outre le système d'alimentation 19, au moins un autre système d'alimentation, un par produit fluide, pour alimenter le dispositif d'application 16 avec chacun de ces produits fluides. En outre, le dispositif d'application 16 comprend alors un organe de réglage 36 pour chaque produit fluide, le module de commande 38 étant configuré pour produire pour chacun de ces organes de réglage une consigne de commande fonction de la vitesse mesurée par le dispositif de mesure de vitesse 34.

## Revendications

1. Dispositif d'application (16) pour l'application d'au moins un produit fluide sur un substrat (4), le dispositif d'application (16) comprenant :
- un organe d'application (30), pour la mise en forme du ou de chaque produit fluide en vue de son application sur le substrat (4), l'organe d'application (30) présentant un orifice (32) de sortie du ou des produit(s) fluide(s) hors du dispositif d'application (16),
- pour au moins un produit fluide, un organe de réglage (36) apte à régler un débit de dosage du produit fluide à travers l'orifice de sortie (32) en fonction d'une consigne de commande dudit organe de réglage (36), et
- un module de commande (38) pour déterminer la consigne de commande et la fournir à l'organe de réglage (36),
dans lequel le dispositif d'application (16) comprend également un dispositif de mesure de vitesse (34) apte à déterminer une vitesse mesurée de l'orifice de sortie (32) relativement à un référentiel inertiel, le module de commande (38) étant configuré pour déterminer la consigne de commande en fonction de ladite vitesse mesurée,
**caractérisé en ce que** le dispositif de mesure de vitesse (34) comprend au moins un accéléromètre (40), au moins un gyroscope (42) et un magnétomètre (44), et le module de commande (38) est à une distance du dispositif de mesure de vitesse (34) inférieure à 5 cm, le module de commande (38) étant à une distance de l'organe de réglage (36) inférieure à 10 cm.

2. Dispositif d'application (16) selon la revendication 1, dans lequel la consigne de commande est adaptée pour que le rapport entre le débit de dosage du produit fluide et la vitesse mesurée de l'orifice de sortie soit sensiblement constant.

3. Dispositif d'application (16) selon la revendication 1 ou 2, dans lequel le dispositif de mesure de vitesse (34) est à une distance de l'orifice de sortie (32) inférieure à 15 cm.

4. Dispositif d'application (16) selon l'une quelconque des revendications précédentes, dans lequel l'organe de réglage (36) est à une distance de l'orifice de sortie (32) inférieure à 15 cm.

5. Dispositif d'application (16) selon l'une quelconque des revendications précédentes, dans lequel le produit fluide a une viscosité comprise entre 3000 et 300000 mPa.s.

6. Robot applicateur (8) pour l'application d'un produit fluide sur un substrat (4), le robot applicateur (8) comprenant un bâti, un bras articulé (20) formé d'une pluralité de segments (22) articulés les uns aux autres, un poignet (24) monté à une extrémité du bras articulé (20), et un dispositif d'application (16) selon l'une quelconque des revendications précédentes dont l'organe d'application (30) est monté à une extrémité distale du poignet (24).

7. Robot applicateur (8) selon la revendication 6, dans lequel le module de commande (38) est monté sur le poignet (24) ou sur le segment (22) le plus proche du poignet (24).

8. Robot applicateur (8) selon la revendication 6 ou 7, dans lequel le dispositif de mesure de vitesse (34) est monté sur l'organe d'application (30).

9. Robot applicateur (8) selon l'une quelconque des revendications 6 à 8, dans lequel la vitesse mesurée est constituée par la vitesse de l'orifice de sortie (32) relativement au bâti.

10. Procédé (100) d'application d'un produit fluide sur un substrat (4), **caractérisé en ce qu'**il comprend les étapes successives suivantes :
- fourniture (110) d'un dispositif d'application (16) selon l'une quelconque des revendications 1 à 5,
- dosage (159) du produit fluide à travers l'orifice de sortie (32) à un premier débit de dosage, l'orifice de sortie (32) se déplaçant à une première vitesse,
- changement (160) de vitesse de l'orifice de sortie (32), et
- dosage (179) du produit fluide à travers l'orifice de sortie (32) à un deuxième débit de dosage différent du premier débit de dosage.

## Patentansprüche

1. Auftragsvorrichtung (16) zum Auftragen mindestens eines fließfähigen Produkts auf ein Substrat (4), die Auftragsvorrichtung (16) umfassend:
- ein Auftragselements (30) zum Formen des oder jedes fließfähigen Produkts zum Auftragen auf das Substrat (4), wobei das Auftragselements (30) eine Öffnung (32) zum Auslass des oder der fließfähigen Produkte aus der Auftragsvorrichtung (16) aufweist,
- für mindestens ein fließfähiges Produkt ein Einstellelement (36), das angepasst ist, um eine Dosierrate des fließfähigen Produkts durch die Auslassöffnung (32) in Abhängigkeit von einem Steuervorgabewert des Einstellelements (36) einzustellen, und
- ein Steuermodul (38), um den Steuervorgabewert den Steuervorgabewert zu bestimmen und das Einstellelement (36) bereitzustellen,
wobei die Auftragsvorrichtung (16) auch eine Geschwindigkeitsmessvorrichtung (34) umfasst, die angepasst ist, um eine gemessene Geschwindigkeit der Auslassöffnung (32) in Bezug auf einen inertialen Bezugswert zu bestimmen, wobei das Steuermodul (38) konfiguriert ist, um den Steuervorgabewert in Abhängigkeit von der gemessenen Geschwindigkeit zu bestimmen, **dadurch gekennzeichnet, dass** die Geschwindigkeitsmessvorrichtung (34) mindestens einen Beschleunigungsmesser (40), mindestens ein Gyroskop (42) und ein Magnetometer (44) umfasst und das Steuermodul (38) in einem Abstand von weniger als 5 cm von der Geschwindigkeitsmessvorrichtung (34) ist, wobei das Steuermodul (38) in einem Abstand von weniger als 10 cm von dem Einstellelement (36) ist.

2. Auftragsvorrichtung (16) nach Anspruch 1, wobei der Steuervorgabewert angepasst ist, damit das Verhältnis der Dosierrate des fließfähigen Produkts zu der gemessenen Geschwindigkeit der Auslassöffnung im Wesentlichen konstant ist.

3. Auftragsvorrichtung (16) nach Anspruch 1 oder 2, wobei die Geschwindigkeitsmessvorrichtung (34) in einem Abstand von weniger als 15 cm von der Auslassöffnung (32) ist.

4. Auftragsvorrichtung (16) nach einem der vorherigen Ansprüche, wobei das Einstellelement (36) in einem Abstand von weniger als 15 cm von der Auslassöffnung (32) ist.

5. Auftragsvorrichtung (16) nach einem der vorherigen Ansprüche, wobei das fließfähige Produkt eine Viskosität zwischen 3000 und 300.000 mPa.s umfasst.

6. Auftragsroboter (8) zum Auftragen eines fließfähigen Produkts auf ein Substrat (4), der Auftragsroboter (8) umfassend ein Gestell, einen Gelenkarm (20), der aus einer Vielzahl von Segmenten (22) gebildet ist, die untereinander gelenkig sind, einen Griff (24), der an einem Ende des Gelenkarms (20) montiert ist, und eine Auftragsvorrichtung (16) nach einem der vorherigen Ansprüche umfasst, deren Auftragselement (30) an einem distalen Ende des Griffs (24) montiert ist.

7. Auftragsroboter (8) nach Anspruch 6, wobei das Steuermodul (38) an dem Griff (24) oder an dem Segment (22), das dem Griff (24) am nächsten ist, montiert ist.

8. Auftragsroboter (8) nach Anspruch 6 oder 7, wobei die Geschwindigkeitsmessvorrichtung (34) an dem Auftragselement (30) montiert ist.

9. Auftragsroboter (8) nach einem der Ansprüche 6 bis 8, wobei die gemessene Geschwindigkeit aus der Geschwindigkeit der Auslassöffnung (32) in Bezug auf das Gestell ist.

10. Verfahren (100) zum Auftragen eines fließfähigen Produkts auf ein Substrat (4), **dadurch gekennzeichnet, dass** es die folgenden aufeinanderfolgenden Schritte umfasst:
- Bereitstellen (110) einer Auftragsvorrichtung (16) nach einem der Ansprüche 1 bis 5,
- Dosieren (159) des fließfähigen Produkts durch die Auslassöffnung (32) mit einer ersten Dosierrate, wobei sich die Auslassöffnung (32) mit einer ersten Geschwindigkeit bewegt,
- Ändern (160) der Geschwindigkeit der Auslassöffnung (32), und
- Dosieren (179) des fließfähigen Produkts durch die Auslassöffnung (32) mit einer zweiten Dosierrate, die sich von der ersten Dosierrate unterscheidet.

## Claims

1. An application device (16) for applying at least one fluid product on a substrate (4), the application device (16) comprising:
- an application member (30), for shaping the or each fluid product for its application on the substrate (4), the application member (30) having an outlet orifice (32) through which the fluid product(s) come out of the application device (16),
- for at least one fluid product, an adjusting member (36) able to adjust a dosing flow of the fluid product through the outlet orifice (32) as a function of a command input of said adjusting member (36), and
- a command module (38) for determining the command input and supplying it to the adjusting member (36),
in which the application device (16) also comprises a speed measuring device (34) able to determine a measured speed of the outlet orifice (32) relative to an inertial reference, the command module (38) being configured to determine the command input as a function of said measured speed,
**characterized in that** the speed measuring device (34) comprises at least one accelerometer (40), at least one gyroscope (42) and a magnetometer (44), and
the command module (38) is at a distance from the speed measuring device (34) of less than 5 cm, the command module (38) being at a distance from the adjusting device (36) of less than 10 cm.

2. The application device (16) according to claim 1, wherein the command input is suitable so that the ratio between the dosing flow of the fluid product and the measured speed of the outlet orifice is substantially constant.

3. The application device (16) according to claim 1 or 2, wherein the speed measuring device (34) is at a distance from the outlet orifice (32) of less than 15 cm.

4. The application device (16) according to any one of the preceding claims, wherein the adjusting member (36) is at a distance from the outlet orifice (32) of less than 15 cm.

5. The application device (16) according to any one of the preceding claims, wherein the fluid product has a viscosity of between 3000 and 300,000 mPa.s.

6. An applicator robot (8) for the application of a fluid product on a substrate (4), the applicator robot (8) comprising a frame, an articulated arm (20) made of a plurality of segments (22) articulated relative to one another, a wrist (24) mounted at one end of the articulated arm (20), and an application device (16) according to any one of the preceding claims, the application member (30) of which is mounted at a distal end of the wrist (24).

7. The applicator robot (8) according to claim 6, wherein the command module (38) is mounted on the wrist (24) or on the segment (22) closest to the wrist (24).

8. The applicator robot (8) according to claim 6 or 7, wherein the speed measuring device (34) is mounted on the application member (30).

9. The applicator robot (8) according to any one of claims 6 to 8, wherein the measured speed consist of the speed of the outlet orifice (32) relative to the frame.

10. A method (100) for applying a fluid product on a substrate (4), **characterized in that** it comprises the following successive steps:
- providing (110) an application device (16) according to any one of claims 1 to 5,
- dosing (159) the fluid product through the outlet orifice (32) at a first dosing flow, the outlet orifice (32) moving at a first speed,
- changing (160) the speed of the outlet orifice (32), and
- dosing (179) the fluid product through the outlet orifice (32) at a second dosing flow different from the first dosing flow.
